# EUROPÄISCHE PATENTSCHRIFT

(11) **EP 2 774 487 B1**
(45) Veröffentlichungstag und Bekanntmachung des Hinweises auf die Patenterteilung: **26.07.2017**
(21) Anmeldenummer: 13157999.7
(22) Anmeldetag: 06.03.2013
(51) Int. Cl.: A23G 4/12, A23G 4/20, A23L 29/20, A23L 5/00, A23G 4/06, A23G 4/10

(54) **Dragierter Kaugummi mit Hartkaramellschicht**
Coated chewing gum with hard caramel coating
Chewing-gum en forme de dragée doté d'une couche de caramel dure

(43) Veröffentlichungstag der Anmeldung: 10.09.2014
(73) Patentinhaber: Müller-Vivil, Alexander, 77654 Offenburg (DE)
(72) Erfinder: Müller-Vivil, Alexander, 77654 Offenburg (DE)
(74) Vertreter: Kossak, Sabine

(56) Entgegenhaltungen:
- EP-A1- 2 316 279
- WO-A1-2008/100851
- WO-A2-01/45518
- WO-A2-2011/084759
- WO-A2-2012/125397
- CN-A- 1 079 108

## Beschreibung

Gegenstand der Erfindung ist ein Kaugummi, vorzugsweise zuckerfrei, aufweisend eine Kaumasse und eine Dragierung, wobei die Kaumasse mindestens eine Kaubase und mindestens einen Zucker und/oder mindestens einen Zuckeraustauschstoff enthält und die Dragierung mindestens einen Zucker und/oder mindestens einen Zuckeraustauschstoff, mindestens einen Süßstoff und Wasser enthält.
Kaugummis in zuckerhaltiger und zuckerfreier Variante sind seit langem bekannt und erfreuen sich großer Beliebtheit. In zuckerfreien Kaugummis wird dabei üblicherweise eine Mischung aus Zuckeraustauschstoffen und Süßstoffen zur Süßung eingesetzt. Hierfür haben sich insbesondere die in jüngster Zeit erhältlichen Zuckeraustauschstoffe auf Basis von Polyolen bewährt.

Allerdings ist die Aromatisierung von Kaugummis, sowohl von zuckerhaltigen als auch zuckerfreien, bisher schwierig, da das Aroma extrem hoch dosiert werden muss, um ein gutes Geschmacksergebnis zu erreichen. So ist teilweise eine 4- bis 10-mal so hohe Aromamenge wie bei sonstigen Lebensmitteln notwendig, um ein gutes Aroma zu erhalten. Üblicherweise werden deshalb in Kaugummis sehr geschmacksintensive, natürliche Aromen, wie Orange, Zitrone, Pfefferminze oder Krauseminze, eingesetzt. Alternativ werden hochkonzentrierte naturidentische Aromen verwendet, wobei bei der Wahl des Aromas jeweils darauf zu achten ist, dass das Aroma die Kaubase nicht angreift. Einige Aromen oder eine zu hohe Aromadosierung beeinflussen negativ die Plastizität der Kaubase. Es ist zudem darauf zu achten, dass die Aromen während des Kauvorganges aus der Kaubase freigesetzt werden. Die Aromen sollten daher bevorzugt in der hydrophilen Phase aus Zucker bzw. Zuckeraustauschstoff verbleiben, um während des Kauens freigesetzt zu werden. Um bereits zu Beginn des Kauvorganges einen guten Geschmack, d.h. einen sogenannten intensiven Angeschmack, zu erreichen, wird eine Dragierung mit Aroma oder ein Pulver auf der Kaugummioberfläche verwendet.

Die EP 1 357 800 B1 beschreibt einen Hartkaramelllutscher mit einer Zwischenschicht aus Kaugummi. Hier wird das Aroma zusätzlich zur Kaubase in die Hartkaramellschicht bzw. in eine flüssige Füllung im Kern gegeben.

In der WO 2011/084759 wird ein Bonbon mit Hartkaramell- und Kaugummischichten offenbart. Im Vordergrund der Erfindung steht die Mehrschichtigkeit des Bonbons, welche von dem Verbraucher visuell, geschmacklich und taktil wahrgenommen werden soll. Eine Homogenität wie es die vorliegende Erfindung bereitstellt wird von der WO 2011/084759 nicht angestrebt.

Nachteil bekannter Kaugummis ist somit, dass eine hohe Aromadosierung notwendig ist, überhaupt nur bestimmte Aromen verwendet werden können und vielfach eine Mischung von Aromen nicht möglich ist. Bei der Kombination verschiedener Aromen können diese teilweise miteinander reagieren, so dass es zu einem bitteren Geschmack des Kaugummis bzw. einer Zerstörung der Aromastoffe kommt.

Aufgabe der vorliegenden Erfindung ist es daher, einen Kaugummi bereitzustellen, der die Verwendung verschiedener Aromen in Kombination, die Verwendung einer geringen Aromadosierung, einen guten Angeschmack beim Kauen des Kaugummis und eine gleichmäßige Aromafreisetzung während des Kauvorgangs erlaubt.

Die Aufgabe wird erfindungsgemäß gelöst durch einen, vorzugsweise zuckerfreien, Kaugummi, gemäß Patentanspruch 1.

Weitere Ausführungsformen sind Gegenstand der Unteransprüche oder nachfolgend beschrieben.

Unter "zuckerfrei" wird im Sinne der Erfindung frei von Rüben- oder Rohrzucker, also frei von Saccharose verstanden, die beispielweise als raffinierter Zucker, Weißzucker, Halbweißzucker, Flüssigzucker oder Invertzucker zuckerhaltigen Süßwaren zugesetzt werden.

Der erfindungsgemäße Kaugummi enthält vorzugsweise ein Geliermittel, bevorzugt die Geliermittel Gellan, Gellan Gum, Gelatine, Gummi Arabicum, Johannisbrotkernmehl oder Xanthan, besonders bevorzugt Gellan, Gellan Gum, Gummi Arabicum oder eine Mischung hiervon.

Bevorzugt besteht der Kaugummi aus 30 bis 60 Gew.-%, bevorzugt 40 - 50 Gew.-% Kaumasse, 20 bis 50 Gew.-%, bevorzugt 25 - 35 Gew.-% Hartkaramellschicht und 10 bis 35 Gew.-%, bevorzugt 20 - 30 Gew.-% Dragierung. Die Hartkaramellschicht weist dabei eine Restfeuchte von 5 bis 10 Gew.-% auf.

Der erfindungsgemäße Kaugummi kann Zucker enthalten. Üblicherweise werden als Zucker Glucose, Saccharose, Fructose, Invertzucker, Maltose, Lactose oder eine Mischung hiervon eingesetzt.

Der erfindungsgemäße Kaugummi weist alternativ anstelle von Zucker oder zusätzlich Zuckeraustauschstoffe und/oder Süßstoffe auf. Die Zuckeraustauschstoffe sind bevorzugt Polyole, besonders bevorzugt Mannit, Sorbit, Xylit, Maltit bzw. Maltitsirup, Lactit, Isomalt, Erythrit oder eine Mischung hiervon. Besonders bevorzugt weist die Kaumasse eine Mischung aus Maltitsirup, Isomalt, Sorbit und/oder Xylit als Zuckeraustauschstoffe auf. Die Hartkaramellschicht weist als Zuckeraustauschstoff bevorzugt Isomalt und/oder Maltitsirup auf. Die Dragierung weist als Zuckeraustauschstoff bevorzugt Isomalt, Maltit und/oder Sorbit, bevorzugt Isomalt, auf. Als Süßstoffe können alle handelsüblichen Süßstoffe eingesetzt werden, bevorzugt werden als Süßstoffe Aspartam, Acesulfam K, Neotam, Stevia, Twinsweet® (Aspartam-Acesulfam-Salz), Sucralose oder eine Mischung hiervon verwendet.

Die Kaumasse enthält mindestens eine Kaubase, bevorzugt 25 bis 35 Gew.-% Kaubase, mindestens einen Zuckeraustauschstoff, bevorzugt 50 bis 70 Gew.-% mindestens eines Zuckeraustauschstoffes, mindestens einen Süßstoff, mindestens einen Weichmacher und mindestens einen Aromastoff, jeweils bezogen auf die Gesamtmasse der Kaumasse. Die Kaumasse des erfindungsgemäßen Kaugummis enthält besonders bevorzugt
- 25 bis 35 Gew.-% mindestens eine Kaubase,
- 50 bis 70 Gew.-% mindestens eines Zuckeraustauschstoffs,
- 0,05 bis 0,2 Gew.-% mindestens eines Süßstoffs,
- 0,5 bis 2 Gew.-% Weichmacher und/oder Feuchtemittel und
- 0,01 bis 5 Gew.-% mindestens eines flüssigen und/oder eines pulverförmigen Aromastoffs,
- 0 bis 5 Gew.-% Vitamine, Spurenelemente, sonstige Mineralstoffe, Säuren, zahnpflegende Stoffe oder eine Mischung hiervon,
wobei sich die Komponenten zu 100 Gew.-% ergänzen.

Die Dragierung enthält bevorzugt 70 bis 99 Gew.-% mindestens eines Zuckeraustauschstoffes, bezogen auf die Gesamtmasse der Dragierung. Die Dragierung enthält
- 50 bis 99 Gew.-% mindestens eines Zuckeraustauschstoffes,
- 0,001 bis 5 Gew.-% mindestens eines Geliermittels, bevorzugt Gellan oder Gummi Arabicum,
- 0 bis 2 Gew.-% eines Farbstoffes,
- 0,001 bis 0,3 Gew.-% mindestens eines Süßstoffes,
- 0 bis 5 Gew.-% mindestens eines Aromastoffs,
- sowie ggf. mindestens ein Glanzmittel und ggf. mindestens ein Trennmittel und
- Restwasser,
wobei sich die Komponenten zu 100 Gew.-% ergänzen.

Besonders bevorzugt besteht die Dragierung aus einer Angummierung, einer Weichdragierung und einer Hartdragierung. Die Angummierung hat auf der Hartzuckerschicht eine raue Oberfläche zu schaffen, auf der die Dragierung leichter aufgetragen werden kann und einen besseren Halt hat.

Die Hartkaramellschicht des erfindungsgemäßen Kaugummis enthält
- 50 bis 95 Gew.-% mindestens eines Zuckeraustauschstoffes,
- 0,001 bis 5 Gew.-% mindestens eines Geliermittels, bevorzugt Gellan oder Gummi Arabicum,
- 0,001 bis 5 Gew.-% mindestens eines Aromas, mindestens eines Vitamins, mindestens eines Spurenelementes, mindestens eines sonstigen Mineralstoffes, mindestens eines zahnpflegenden Stoffes oder einer Mischung hiervon,
- ggf. mindestens eine Säure,
- ggf. mindestens einen Süßstoff,
- Wasser,
wobei sich die Komponenten zu 100 Gew.-% ergänzen. Die Kaumasse, die Dragierung und die Hartkaramellschicht werden in den vorgenannten Zusammensetzungen miteinander kombiniert. Die Kaumasse und die Hartkaramellschicht enthalten bevorzugt verschiedene Aromen mit verschiedenen Geschmacksrichtungen. Besonders bevorzugte Aromen sind flüssige und/oder pulverförmige Aromen sowie verkapselte Aromen, z.B. Evercool®- und Everfresh®-Mint-Aromen von Givaudan, Q. Pearl®, Pearl- und Permaseal®-Aromen von Givaudan, Powercaps®- und Physcool®-Aromen von Mane Fils sowie Luctadry-Pulveraromen von Lucta.

Der erfindungsgemäße Kaugummi weist als inneren Kern eine Kaumasse auf. Diese Kaumasse ist zumindest teilweise von einer Hartkaramellschicht (Hartzuckerdecke) umgeben. Nach außen wird der erfindungsgemäße Kaugummi von einer Dragierung auf der Hartkaramellschicht umschlossen. Bevorzugt ist die Kaumasse im wesentlichen vollständig von der Hartkaramellschicht umgeben, d.h. mit dieser beschichtet, wobei produktionsbedingte kleinere Risse oder Lücken vorliegen können. Bei einem kugelförmigen Kaugummi wird z.B. der innere kugelförmige Kern aus Kaumasse von einer Hohlkugel in Form der Hartzuckerdecke umhüllt, die ihrerseits wieder von einer Dragierung umgeben ist. Bei einem flachen Kaugummi wird entsprechend z.B. das flache Kaumasse-Innere auch von einer flachen Hartkaramellschicht umschlossen oder es sind Streifen der Hartkaramellschicht auf die Kaumasse aufgetragen. Die Dragierung umschließt dann Kaumasse und Hartkaramellschicht vollständig.

Die Dragierung wird in einer Ausführung aus einer Angummierung, Weichdragierung und darauf aufgetragenen Hartdragierung hergestellt. Je nach gewünschtem Äußeren des Kaugummis enthält die Dragierung bevorzugt einen oder mehrere Farbstoffe.

So wird beispielsweise zur Erzeugung eines weißen Kaugummis Titandioxid der Dragierung zugegeben. Auch Calcium-Carbonat wird für eine weiße Farbe genutzt. Diverse weitere Farbstoffe sind zur Erzielung unterschiedlicher Farben üblich:
- echtes Karmin: rot,
- rote Beete: rot,
- Kurkumin (Gelbwurz): gelb,
- ß-Carotin: orange,
- Paprika-Konzentrat: orange,
- Kupfer-Chlorophyllin: grün,
- Indigotin: blau,
- Pflanzenkohle: schwarz.

Auch können Farb-Flakes auf Stärke-Basis in unterschiedlichen Farben eingesetzt werden. Die Farb-Flakes werden auf die letzte, noch feuchte Dragierschicht aufgetragen.

Die Kombination von Kaumasse und Hartkaramellschicht des erfindungsgemäßen Kaugummis erlaubt es, verschiedene Aromen in der Kaumasse und der Hartkaramellschicht einzusetzen, d.h. Aromen mit verschiedenen Geschmacksrichtungen in einem Kaugummi. Hierdurch ist es möglich, Aroma-Kombinationen zu erzeugen, die in herkömmlichen Kaugummis nicht möglich sind. Zum einen können Aromen wie fruchtig und minzig (minzfrisch) bzw. mentholfrisch kombiniert werden, die in herkömmlichen Kaugummis miteinander reagieren würden, so dass ein bitterer Geschmack entsteht. Zum anderen können in der Hartkaramellschicht technisch andere Aromastoffe eingesetzt werden als in der Kaumasse, in der aus verarbeitungstechnischen Gründen nur eine begrenzte Auswahl von Aromastoffen verarbeitet werden können und somit nur eine begrenzte Zahl von Geschmacksrichtungen realisiert werden können. In der Hartkaramellschicht ist es möglich, nahezu alle in Lebensmitteln üblichen Aromastoffe einzusetzen, während bei herkömmlichen Kaugummis nur sehr geschmacksintensive und hochkonzentrierte Aromen verwendet werden können. Hierdurch lässt sich zum einen die Menge des eingesetzten Aromas reduzieren, zum anderen können Geschmacksrichtungen erreicht werden, die in herkömmlichen Kaugummis nicht erreicht werden können. Ein Beispiel für solche Geschmacksrichtungen sind Kombinationen aus Frucht- und Mintaromen, d.h. von fruchtigen und kühlenden Aromen in einem Kaugummi. Durch die getrennte Einarbeitung dieser unterschiedlichen Aromen in zwei Kaugummischichten - in die Hartkaramellschicht und in die Kaumasse - ist die Realisierung reiner Mischgeschmacke ohne bittere Note möglich.
Die Hartkaramellschicht, die die Kaumasse umgibt, ist bevorzugt unerwarteterweise beim Kauen soft. Beim ersten Beißen des Kaugummis splittert die Hartkaramellschicht nicht, wie dieses von üblichen Hartkaramellen oder Hartkaramellschichten bekannt ist. Vielmehr wird eine Hartkaramellschicht erzielt, die weich ist und einen mürben Anbiss aufweist. Dieses wird erfindungsgemäß zum einen durch die Verwendung des Geliermittels erreicht. Zum anderen erlaubt die auf der Hartkaramellschicht aufgetragene Dragierung, dass die Restfeuchte in der Hartkaramellschicht erhalten bleibt und diese nicht nachträglich aushärtet.
Der erfindungsgemäße, bevorzugt zuckerfreie, Kaugummi weist somit neben einer besonderen Kombination von Aromen auch ein "unauffälliges" Kauverhalten, also das typische Kauverhalten eines marktüblichen Kaugummis, auf, das ebenfalls zum guten Geschmack beiträgt.

Die erfindungsgemäße Hartkaramellschicht erlaubt neben dem Zusatz von Aromen auch den Zusatz von Vitaminen. In herkömmliche Kaugummis können viele Vitamine ebenfalls nicht eingebracht werden, da sie sich zum Teil nicht aus der lipophilen Kaubase lösen, die Kaubase angreifen oder den Geschmack negativ beeinflussen. Bei dem erfindungsgemäßen Kaugummi werden in einer Ausführungsform der Hartkaramellschicht Vitamine zugesetzt, so dass der erfindungsgemäße Kaugummi zusätzlich Vitamine enthält. Bevorzugt werden als Vitamine Vitamin C, Vitamin B2, Vitamin B6, Vitamin B12, Vitamin E, Vitamin D, Vitamin A, Biotin, Niacin, Thiamin, Pantothensäure, Folsäure oder Mischungen hiervon zugesetzt.
Als Zusatzstoffe werden ggf. auch Mineralstoffe, u.a. Spurenelemente, eingesetzt, z.B. Calcium, Magnesium, Zink und/oder Eisen.

Weitere geeignete Zusatzstoffe sind Säuren. Ebenso sind geeignete Zusatzstoffe zahnpflegende Stoffe, z.B. Abrasivstoffe, wie Calciumphosphate.

### Beispiel

Die Erfindung wird anhand des nachfolgenden Beispiels näher erläutert:
Es wurden eine erfindungsgemäße Kaumasse, eine Hartkaramellschicht und eine Dragierung erzeugt, auf Basis der folgenden Zusammensetzungen:

### Kaumasse:

| **Eingesetzter Rohstoff** | **Nähere Erläuterung** | **Menge in kg** |
|---|---|---|
| Gum Base Solsona T | Kau-Base | 15,500 |
| C*Mannidex 16705 | Mannit; Polyol | 15,500 |
| Neosorb® P60W | Sorbit; Polyol | 15,500 |
| Xylisorb® 90 | Xylit; Polyol | 1,500 |
| Lycasin® 80/55 | Maltit-Sirup; Polyol | 3,500 |
| Glycerin Ph.Eur.III 86% | Feuchthaltemittel | 0,750 |
| Delios® V | MCT-ÖI | 0,185 |
| Aspartam | Süßstoff | 0,045 |
| Sucralose | Süßstoff | 0,015 |
| AsperCote 25 ELP | Süßstoff | 0,015 |
| Zitronensäure c44-90 | Säure | 0,600 |
| Luctadry Wild Cherry 28366A | Aroma | 0,270 |
| Wild Cherry 28445A | Aroma | 0,800 |
| Lucta Fresh 02337A | Aroma | 0,050 |
| | | gesamt: 54,230 kg |

Die Kaubase wurde mit Lycasin®, Glycerin und Delios® V verknetet. Anschließend wurden Mannit, Sorbit, Xylit, die Süßstoffe und die Zitronensäure zugegeben. Die Aromen wurden dann untergemischt und alles zu einer homogenen Kaumasse verknetet.

### Hartkaramellschicht:

| **Rohstoff** | **Nähere Erläuterung** | **Menge in kg** |
|---|---|---|
| Isomalt M | Isomalt; Polyol | 60,000 |
| Isomalt PF | Isomalt; Polyol | 1,340 |
| Delios® V | MTC-ÖI | 0,500 |
| Wasser | | 40,000 |
| Lycasin® 80/55 | Maltit-Sirup; Polyol | 12,000 |
| Optamint® 225977 | Aroma | 0,134 |
| Gummi-Arabicum-Pulver | Verdickungsmittel | 1,600 |
| Wasser | | 6,400 |
| | | gesamt:121,974 kg |
| | | 97,204 kg tatsächliche Ausbeute |

Isomalt M wurde in Wasser vorgelöst und auf 110°C aufgekocht. Die restlichen Zutaten wurden miteinander zu einer homogenen Lösung vermischt und zum Isomalt M/ Wasser-Gemisch gegeben. Das Gemisch wurde bis zu einem Restwassergehalt von etwa 7 Gew.-% gekocht.

### Dragierung:

| **Rohstoff** | **Nähere Erläuterung** | **Menge in kg** |
|---|---|---|
| Isomalt PF Pulver | Isomalt; Polyol | 75,000 |
| Talkum | Trennmittel | 0,500 |
| Menthol Indisch | Aroma | 1,800 |
| Lucta Fresh 02337 | Aroma | 0,600 |
| Optamint® 204576 | Aroma | 1,200 |
| Quick Glanz C Carnauba-Wachs | Glanzmittel | 0,600 |
| Red Flakes 108693. YN | Farb-Flakes | 0,900 |
| Dragierlösung Kaugummi | | 270,000 |
| | | gesamt: 350,600 kg |
| | | 261,491 kg tatsächliche Ausbeute |

### Dragierlösung Kaugummi

| **Rohstoff** | **Nähere Erläuterung** | **Menge in kg** |
|---|---|---|
| Wasser | | 86,568 |
| Isomalt GS-Pulver | Isomalt; Polyol | 175,479 |
| Gummi Arabicum | Verdickungsmittel | 6,036 |
| Titandioxid Kronos® 1171 | weißer Farbstoff | 1,346 |
| Aspartam | Süßstoff | 0,162 |
| Acesulfam K | Süßstoff | 0,409 |
| | | gesamt: 270,000 kg |

Die Dragierlösung wurde zubereitet, indem Isomalt GS mit dem Wasser auf etwa 80°C erhitzt wurde. Anschließend wurden die restlichen Zutaten zugegeben. Alles wurde zu einer homogenen Masse gekocht. Die Dragierlösung wurde zur weiteren Verwendung auf eine Temperatur von 60°C temperiert.

Zur Herstellung des Kaugummis wurden Kaumasse und Hartkaramellschicht über den Co-Extruder zusammengeführt, so dass die Hartkaramellschicht schließlich die Kaumasse umgab. Diese Masse wurde egalisiert, d.h. zu einem Strang ausgeformt, und im Prägesatz zu Kaugummikernen, Rohlingen ohne Dragierung, ausgeformt. Diese Kaugummi-Rohlinge wurden dann im Kühltunnel abgekühlt, bevor die Dragierung aufgetragen wurde.

Zunächst wurden zwei Dragier-Schichten auf die Kaugummi-Rohlinge aufgetragen und danach jeweils mit Isomalt PF-Pulver abgestreut, bis die Rohlinge trocken waren. Anschließend wurden zwei weitere Dragier-Schichten auf die Kaugummi-Rohlinge aufgetragen, die nicht mehr mit Isomalt PF-Pulver abgestreut wurden, sondern jeweils solange im Dragierkessel mit warmer Luft umgewälzt wurden, bis die Dragierlösung vollständig verdampft war und die Kaugummi-Rohlinge abgetrocknet waren. Gegen Ende des Dragierens wurden zu der Dragierlösung noch die Aromen gegeben, um den Frische-Effekt beim Anbeißen des Kaugummis zu erreichen. Bei der letzten Dragierschicht wurden kurz vor dem vollständigen Abtrocknen der Kaugummi-Rohlinge noch die Farb-Flakes aufgetragen. Schließlich wurden die Kaugummi-Rohlinge noch mit Carnauba-Wachs, welches zur besseren und gleichmäßigeren Verteilung mit Talkum vermischt war, abgeglänzt, d.h. pulverförmiges Carnauba-Wachs wurde zu den dragierten Kaugummi-Rohlingen gegeben; durch die Umwälzung der einzelnen Kaugummis im Dragierkessel entstand nach und nach der Glanz.

Ein Großteil der wässrigen Lösung - zugegebenes Wasser, aber auch Restfeuchte der eingesetzten sonstigen Zutaten - verdampfte während dieses Prozesses. Der Restwassergehalt der Dragierung nach dem Trocknen betrug 2,5 Gew.-%.

Der Anteil der Kaumasse am Gesamtprodukt beträgt ca. 28 Gew.-%, der Anteil der Hartkaramellschicht ca. 42 Gew.-% und der Anteil der Dragierung ca. 30 Gew.-%.

Der Kaugummi zeigt ein gutes Kauverhalten und hat einen fruchtig-frischen Geschmack nach Wildkirsche und gleichzeitig nach Minze, d.h. einen minzfrischen Geschmack.

## Patentansprüche

1. Kaugummi aufweisend eine Kaumasse und eine Dragierung, wobei
- die Kaumasse mindestens a) eine Kaubase und b) mindestens einen Zucker und/oder mindestens einen Zuckeraustauschstoff enthält und
- die Dragierung mindestens einen Zucker und/oder mindestens einen Zuckeraustauschstoff, mindestens einen Süßstoff und Wasser enthält,
**dadurch gekennzeichnet, dass** die Kaumasse zumindest teilweise von einer Hartkaramellschicht umhüllt ist, die einen mürben Anbiss aufweist, und die Hartkaramellschicht
- 50 bis 95 Gew.-% mindestens eines Zuckeraustauschstoffes,
- 0,001 bis 5 Gew.-% mindestens eines Geliermittels,
- 0,001 bis 5 Gew.-% mindestens eines Aromas, mindestens eines Vitamins, mindestens eines Spurenelementes, mindestens eines sonstigen Mineralstoffes, mindestens eines zahnpflegenden Stoffes oder einer Mischung hiervon,
- ggf. mindestens eine Säure,
- ggf. mindestens einen Süßstoff,
- Wasser
enthält, wobei sich die Komponenten zu 100 Gew.-% ergänzen und die Restfeuchte der Hartkaramellschicht 5-10 Gew.-% beträgt,
und wobei auf die Hartkaramellschicht die Dragierung derartig aufgetragen ist, dass die Kaumasse und Hartkaramellschicht vollständig umschlossen sind, sodass die Restfeuchte in der Hartkaramellschicht erhalten bleibt und diese nicht nachträglich aushärtet und die Hartkaramellschicht bevorzugt frei von Zucker ist und wobei die Dragierung
- 50 bis 99 Gew.-% mindestens eines Zuckeraustauschstoffes,
- 0,001 bis 5 Gew.-% mindestens eines Geliermittels,
- 0 bis 2 Gew.-% eines Farbstoffes,
- 0,001 bis 0,3 Gew.-% mindestens eines Süßstoffes,
- 0 bis 5 Gew.-% mindestens eines Aromastoffs,
- sowie ggf. mindestens ein Glanzmittel und ggf. mindestens ein Trennmittel und
- Restwasser
enthält, wobei sich die Komponenten in der Dragierung zu 100 Gew.-% ergänzen..

2. Kaugummi gemäß Anspruch 1, **dadurch gekennzeichnet, dass** das Geliermittel Gellan, Gellan Gum, Gelatine, Gummi Arabicum, Johannisbrotkernmehl oder Xanthan ist, bevorzugt Gellan, Gellan Gum und/oder Gummi Arabicum.

3. Kaugummi gemäß einem der vorhergehenden Ansprüche, **dadurch gekennzeichnet, dass** der Kaugummi frei von Zucker ist.

4. Kaugummi gemäß einem der vorhergehenden Ansprüche, **dadurch gekennzeichnet, dass** die Kaumasse mindestens eine Kaubase, bevorzugt 25 bis 35 Gew.-% Kaubase, mindestens einen Zuckeraustauschstoff, bevorzugt 50 bis 70 Gew.-% Zuckeraustauschstoff, mindestens einen Süßstoff enthält und besonders bevorzugt mindestens einen Weichmacher und/oder Feuchtemittel und mindestens einen Aromastoff enthält, jeweils bezogen auf die Gesamtmasse der Kaumasse.

5. Kaugummi gemäß einem der vorhergehenden Ansprüche, **dadurch gekennzeichnet, dass** die Dragierung 70 bis 99 Gew.-% mindestens eines Zuckeraustauschstoffes enthält, bezogen auf die Gesamtmasse der Dragierung.

6. Kaugummi gemäß einem der vorhergehenden Ansprüche, **dadurch gekennzeichnet, dass** der Kaugummi 30 bis 60 Gew.-%, bevorzugt 40 bis 50 Gew.-% Kaumasse, 20 bis 50 Gew.-%, bevorzugt 25 bis 35 Gew.-% Hartkaramellschicht und 10 bis 35 Gew.-%, bevorzugt 20 bis 30 Gew.-% Dragierung enthält, wobei sich die Komponenten zu 100 Gew.-% ergänzen.

7. Kaugummi gemäß einem der vorhergehenden Ansprüche, **dadurch gekennzeichnet, dass** die Zuckeraustauschstoffe bevorzugt Polyole, besonders bevorzugt Mannit, Sorbit, Xylit, Maltit, Maltitsirup, Lactit, Isomalt, Erythrit oder eine Mischung hiervon sind.

8. Kaugummi gemäß einem der vorhergehenden Ansprüche, **dadurch gekennzeichnet, dass** die Kaumasse eine Mischung aus Maltitsirup, Isomalt, Sorbit, Sucralose, Xylit oder eine Mischung hiervon als Zuckeraustauschstoffe enthält, und/oder die Hartkaramellschicht Isomalt und/oder Maltitsirup als Zuckeraustauschstoff und/oder die Dragierung Isomalt als Zuckeraustauschstoff enthält.

9. Kaugummi gemäß einem der vorhergehenden Ansprüche, **dadurch gekennzeichnet, dass** die Kaumasse vollständig von der Hartkaramellschicht umhüllt ist.

10. Kaugummi gemäß einem der vorhergehenden Ansprüche, **dadurch gekennzeichnet, dass** die Kaumasse
- 25 bis 35 Gew.-% mindestens einer Kaubase,
- 50 bis 70 Gew.-% mindestens eines Zuckeraustauschstoffs,
- 0,05 bis 0,2 Gew.-% mindestens eines Süßstoffs,
- 0,5 bis 2 Gew.-% Weichmacher und/oder Feuchtemittel und
- 0,01 bis 5 Gew.-% mindestens eines flüssigen und/oder pulverförmigen Aromastoffs,
- 0 bis 5 Gew.-% Vitamine, Spurenelemente, sonstige Mineralstoffe, Säuren, zahnpflegende Stoffe oder eine Mischung hiervon,
enthält, wobei sich die Komponenten zu 100 Gew.-% ergänzen.

11. Kaugummi gemäß einem der vorhergehenden Ansprüche, **dadurch gekennzeichnet, dass** die Dragierung aus einer Angummierung, einer Weichdragierung und einer Hartdragierung besteht.

12. Kaugummi gemäß einem der vorhergehenden Ansprüche, **dadurch gekennzeichnet, dass** die Dragierung
- 50 bis 99 Gew.-% mindestens eines Zuckeraustauschstoffes,
- 0,001 bis 5 Gew.-% Gummi Arabicum,
- 0 bis 2 Gew.-% eines Farbstoffes,
- 0,001 bis 0,3 Gew.-% mindestens eines Süßstoffes,
- 0 bis 5 Gew.-% mindestens eines Aromastoffs,
- sowie ggf. mindestens ein Glanzmittel und ggf. mindestens ein Trennmittel und
- Restwasser
enthält, wobei sich die Komponenten zu 100 Gew.-% ergänzen.

13. Kaugummi gemäß einem der vorhergehenden Ansprüche, **dadurch gekennzeichnet, dass** die Hartkaramellschicht
- 50 bis 95 Gew.-% mindestens eines Zuckeraustauschstoffes,
- 0,001 bis 5 Gew.-% mindestens eines Geliermittels ausgewählt aus Gellan oder Gummi Arabicum,
- 0,001 bis 5 Gew.-% mindestens eines Aromas, mindestens eines Vitamins, mindestens eines Spurenelementes, mindestens eines sonstigen Mineralstoffes, mindestens eines zahnpflegenden Stoffes oder einer Mischung hiervon,
- ggf. mindestens eine Säure,
- ggf. mindestens einen Süßstoff,
- Wasser
enthält, wobei sich die Komponenten zu 100 Gew.-% ergänzen.

14. Kaugummi gemäß einem der vorhergehenden Ansprüche, **dadurch gekennzeichnet, dass** die Kaumasse und die Hartkaramellschicht verschiedene Aromen in verschiedenen Geschmacksrichtungen enthalten.

## Claims

1. A chewing gum having a chewing mass and a coating, wherein
- the chewing mass contains at least a) one gum base and b) at least one sugar and/or at least one sugar substitute, and
- the coating contains at least one sugar and/or at least one sugar substitute, at least one sweetener, and water,
**characterized in that** the chewing mass is at least partially encased by a hard caramel layer which is crisp to the bite, and the hard caramel layer contains
- 50 to 95 wt.% of at least one sugar substitute,
- 0.001 to 5 wt.% of at least one gelling agent,
- 0.001 to 5% of at least one aroma, at least one vitamin, at least one trace element, at least one other mineral, at least one material with dental care properties, or a mixture of the same,
- optionally at least one acid,
- optionally at least one sweetener,
- water,
wherein the components add up to 100 wt.% and the residual moisture of the hard caramel layer is 5-10 wt.%,
and wherein the coating is applied to the hard caramel layer in such a way that the chewing mass and the hard caramel layer are completely enveloped so that the residual moisture is maintained in the hard caramel layer and this does not subsequently harden, and the hard caramel layer is preferably sugar-free, and wherein the coating contains
- 50 to 99 wt.% of at least one sugar substitute,
- 0.001 to 5 wt.% of at least one gelling agent,
- 0 to 2 wt.% of a coloring agent,
- 0.001 to 0.3 wt.% of at least one sweetener,
- 0 to 5 wt.% of at least one flavoring agent,
- and, optionally, at least one brightening agent and, optionally, at least one separating agent, and
- residual water,
wherein the components in the coating add up to 100 wt.%.

2. The chewing gum according to Claim 1, characterized that the gelling agent is gellan, gellan gum, gelatin, gum arabic, locust bean gum, or xanthan gum, preferably gellan, gellan gum, and/or gum arabic.

3. The chewing gum according to any one of the preceding claims, **characterized in that** the chewing gum is sugar free.

4. The chewing gum according to any one of the preceding claims, **characterized in that** the chewing mass contains at least one gum base, preferably 25 to 35 wt.% gum base, at least one sugar substitute, preferably 50 to 70 wt.% sugar substitute, at least one sweetener, and particularly preferably contains a at least one softening agent and/or a moistening agent and at least one flavoring agent, in each case with respect to the total mass of the chewing mass.

5. The chewing gum according to any one of the preceding claims, **characterized in that** the coating contains 70 to 99 wt.% of at least one sugar substitute with respect to the total mass of the coating.

6. The chewing gum according to any one of the preceding claims, **characterized in that** the chewing gum contains 30 to 60 wt.%, preferably 40 to 50 wt.% chewing mass, 20 to 50 wt.%, preferably 25 to 35 wt.% hard caramel coating, and 10 to 35 wt.%, preferably 20 to 30 wt.% coating, wherein the components add up to 100 wt.%.

7. The chewing gum according to any one of the preceding claims, **characterized in that** the sugar substitutes are preferably polyols, particularly preferably mannitol, sorbitol, xylitol, maltitol, maltitol syrup, lactitol, isomalt, erythritol, or a mixture thereof.

8. The chewing gum according to any one of the preceding claims, **characterized in that** the chewing mass contains a mixture of malitol syrup, isomalt, sorbitol, sucralose, xylitol, or a mixture thereof as the sugar substitutes, and/or the hard caramel layer contains isomalt and/or malitol syrup as the sugar substitute, and/or the coating contains isomalt as the sugar substitute.

9. The chewing gum according to any one of the preceding claims, **characterized in that** the chewing mass is completely encased by the hard caramel layer.

10. The chewing gum according to any one of the preceding claims, **characterized in that** the chewing mass contains
- 25 to 35 wt.% of at least one gum base,
- 50 to 70 wt.% of at least one sugar substitute,
- 0.05 to 0.2 wt.% of at least one sweetener,
- 0.5 to 2 wt.% of a softening agent and/or moistening agent, and
- 0.1 to 5 wt.% of at least one liquid and/or powder flavoring agent,
- 0 to 5 wt.% vitamins, trace elements, other minerals, acids, materials with dental care properties, or a mixture thereof,
wherein the components add up to 100 wt.%.

11. The chewing gum according to any one of the preceding claims, **characterized in that** the coating consists of an agent promoting gumming, a soft coating, and a hard coating.

12. The chewing gum according to any one of the preceding claims, **characterized in that** the coating contains
- 50 to 99 wt.% of at least one sugar substitute,
- 0.001 to 5 wt.% gum arabic,
- 0 to 2 wt.% of a coloring agent,
- 0.001 to 0.3 wt.% of at least one sweetener,
- 0 to 5 wt.% of at least one flavoring agent,
- and, optionally a brightening agent and at least one separating agent, and
- residual water,
wherein the components add up to 100 wt.%.

13. The chewing gum according to any one of the preceding claims, **characterized in that** the hard caramel layer contains
- 50 to 95 wt.% of at least one sugar substitute,
- 0.001 to 5 wt.% of at least one gelling agent selected from gellan or gum arabic,
- 0.001 to 5 wt.% of at least one aroma, at least one vitamin, at least one trace element, at least one other mineral, at least one material with dental care properties, or a mixture thereof,
- optionally, at least one acid,
- optionally, at least one sweetener,
- water,
wherein the components add up to 100 wt.%.

14. The chewing gum according to any one of the preceding claims, **characterized in that** the chewing mass and the hard caramel layer contain different aromas in different flavors.

## Revendications

1. Gomme à mâcher comportant une masse à mâcher et un enrobage de dragée, étant entendu que :
- la masse à mâcher comprend au moins
a) une base à mâcher
b) et au moins un sucre et/ou au moins un substitut de sucre,
- et l'enrobage de dragée comprend au moins un sucre et/ou au moins un substitut de sucre, au moins un édulcorant et de l'eau,
**caractérisée en ce que** la masse à mâcher est enrobée, au moins en partie, d'une couche de caramel dur friable sous la dent, laquelle couche de caramel dur contient :
- de 50 à 95 % en poids d'au moins un substitut de sucre,
- de 0,001 à 5 % en poids d'au moins un agent gélifiant,
- de 0,001 à 5 % en poids d'au moins un arôme, d'au moins une vitamine, d'au moins un oligo-élément, d'au moins une autre substance minérale, d'au moins une substance de soin ou d'entretien des dents, ou d'un mélange de tels composants,
- en option, au moins un acide,
- en option, au moins un édulcorant,
- et de l'eau,
étant entendu que ces composants font au total 100 % en poids et que la teneur en humidité résiduelle de la couche de caramel dur vaut de 5 à 10 % en poids,
et étant entendu que l'enrobage de dragée est déposé par-dessus la couche de caramel dur de telle manière que la masse à mâcher et la couche de caramel dur y sont totalement renfermés, si bien que l'humidité résiduelle reste contenue dans la couche de caramel dur et que celle-ci ne durcit pas davantage, et étant aussi entendu que, de préférence, la couche de caramel dur ne contient pas de sucre,
et étant entendu que l'enrobage de dragée contient
- de 50 à 99 % en poids d'au moins un substitut de sucre,
- de 0,001 à 5 % en poids d'au moins un agent gélifiant,
- de 0 à 2 % en poids d'un colorant,
- de 0,001 à 0,3 % en poids d'au moins un édulcorant,
- de 0 à 5 % en poids d'au moins un arôme,
- ainsi que, en option, au moins un agent lustrant et, en option, au moins un agent de démoulage,
- et de l'eau résiduelle,
étant entendu que les composants de l'enrobage de dragée font au total 100 % en poids.

2. Gomme à mâcher conforme à la revendication 1, **caractérisée en ce que** l'agent gélifiant est du gellane, de la gomme de gellane, de la gélatine, de la gomme arabique, de la farine de caroube, ou du xanthane, et de préférence, du gellane, de la gomme de gellane, et/ou de la gomme arabique.

3. Gomme à mâcher conforme à l'une des revendications précédentes, **caractérisée en ce que** la gomme à mâcher ne contient pas de sucre.

4. Gomme à mâcher conforme à l'une des revendications précédentes, **caractérisée en ce que** la masse à mâcher contient au moins une base à mâcher, de préférence de 25 à 35 % en poids de base à mâcher, au moins un substitut de sucre, de préférence de 50 à 70 % en poids de substitut de sucre, et au moins un édulcorant, et contient en particulier au moins un émollient et/ou humidifiant et au moins un arôme, chaque pourcentage étant rapporté au poids total de la masse à mâcher.

5. Gomme à mâcher conforme à l'une des revendications précédentes, **caractérisée en ce que** l'enrobage de dragée contient de 70 à 99 % en poids d'au moins un substitut de sucre, par rapport au poids total de l'enrobage de dragée.

6. Gomme à mâcher conforme à l'une des revendications précédentes, **caractérisée en ce que** la gomme à mâcher contient de 30 à 60 % en poids, et de préférence de 40 à 50 % en poids, de masse à mâcher, de 20 à 50 % en poids, et de préférence de 25 à 35 % en poids, de couche de caramel dur, et de 10 à 35 % en poids, et de préférence de 20 à 30 % en poids, d'enrobage de dragée, étant entendu que ces composants font au total 100 % en poids.

7. Gomme à mâcher conforme à l'une des revendications précédentes, **caractérisée en ce que** les substituts de sucre sont de préférence des polyols, et en particulier, du mannitol, du sorbitol, du xylitol, du maltitol, du sirop de maltitol, du lactitol, de l'isomalt, de l'érythritol, ou un mélange de ces corps.

8. Gomme à mâcher conforme à l'une des revendications précédentes, **caractérisée en ce que** la masse à mâcher contient, en tant que substitut de sucre, un mélange à base de sirop de maltitol, de l'isomalt, du sorbitol, du sucralose, du xylitol ou un mélange de ceux-ci, et/ou **en ce que** la couche de caramel dur contient, en tant que substitut de sucre, de l'isomalt et/ou du sirop de maltitol, et/ou **en ce que** l'enrobage de dragée contient, en tant que substitut de sucre, de l'isomalt.

9. Gomme à mâcher conforme à l'une des revendications précédentes, **caractérisée en ce que** la masse à mâcher est complètement enrobée par la couche de caramel dur.

10. Gomme à mâcher conforme à l'une des revendications précédentes, **caractérisée en ce que** la masse à mâcher contient :
- de 25 à 35 % en poids d'au moins une base à mâcher,
- de 50 à 70 % en poids d'au moins un substitut de sucre,
- de 0,05 à 0,2 % en poids d'au moins un édulcorant,
- de 0,5 à 2 % en poids d'un émollient et/ou d'un humidifiant,
- de 0,01 à 5 % en poids d'au moins un arôme, liquide et/ou pulvérulent,
- et de 0 à 5 % en poids de vitamines, d'oligo-éléments, d'autres substances minérales, d'acides, de substances de soin ou d'entretien des dents, ou d'un mélange de tels composants,
étant entendu que ces composants font au total 100 % en poids.

11. Gomme à mâcher conforme à l'une des revendications précédentes, **caractérisée en ce que** l'enrobage de dragée est constitué d'un gommage, d'un enrobage souple et d'un enrobage dur.

12. Gomme à mâcher conforme à l'une des revendications précédentes, **caractérisée en ce que** l'enrobage de dragée contient
- de 50 à 99 % en poids d'au moins un substitut de sucre,
- de 0,001 à 5 % en poids de gomme arabique,
- de 0 à 2 % en poids d'un colorant,
- de 0,001 à 0,3 % en poids d'au moins un édulcorant,
- de 0 à 5 % en poids d'au moins un arôme,
- ainsi que, en option, au moins un agent lustrant et, en option, au moins un agent de démoulage,
- et de l'eau résiduelle,
étant entendu que ces composants font au total 100 % en poids.

13. Gomme à mâcher conforme à l'une des revendications précédentes, **caractérisée en ce que** la couche de caramel dur contient :
- de 50 à 95 % en poids d'au moins un substitut de sucre,
- de 0,001 à 5 % en poids d'au moins un agent gélifiant, choisi parmi du gellane et de la gomme arabique,
- de 0,001 à 5 % en poids d'au moins un arôme, d'au moins une vitamine, d'au moins un oligo-élément, d'au moins une autre substance minérale, d'au moins une substance de soin ou d'entretien des dents, ou d'un mélange de tels composants,
- en option, au moins un acide,
- en option, au moins un édulcorant,
- et de l'eau,
étant entendu que ces composants font au total 100 % en poids.

14. Gomme à mâcher conforme à l'une des revendications précédentes, **caractérisée en ce que** la masse à mâcher et la couche de caramel dur contiennent divers arômes, de goûts différents.
